**Europäisches Patentamt**

**European Patent Office**

**Office européen des brevets**

(19)

(11) Veröffentlichungsnummer: **0 061 043**
**B1**

(12) ## EUROPÄISCHE PATENTSCHRIFT

(45) Veröffentlichungstag der Patentschrift:
**20.11.86**

(51) Int. Cl.⁴: **G 21 C 19/40**

(21) Anmeldenummer: **82101753.0**

(22) Anmeldetag: **05.03.82**

(54) **Verfahren zum Manipulieren und/oder Lagern eines ein langgestrecktes Skelett mit Brennstäben aufweisenden Kernreaktorbrennelementes und Kernreaktorbrennelement insbesondere für dieses Verfahren.**

(30) Priorität: **18.03.81 DE 3110582**

(43) Veröffentlichungstag der Anmeldung:
**29.09.82 Patentblatt 82/39**

(45) Bekanntmachung des Hinweises auf die Patenterteilung:
**20.11.86 Patentblatt 86/47**

(84) Benannte Vertragsstaaten:
**BE CH FR IT LI SE**

(56) Entgegenhaltungen:
**DE - A - 1 949 245**
**DE - A - 2 259 669**
**DE - A - 2 724 301**
**DE - A - 2 730 850**
**US - A - 3 377 252**

(73) Patentinhaber: **KRAFTWERK UNION AKTIENGESELLSCHAFT, Wiesenstrasse 35, D-4330 Mülheim (Ruhr) (DE)**
Patentinhaber: **REAKTOR-BRENNELEMENT UNION GmbH, Postfach 11 00 60, D-6450 Hanau 11 (DE)**

(72) Erfinder: **Kühnel, Roland, Berliner Strasse 92, D-6057 Dietzenbach (DE)**
Erfinder: **Ristow, Ulrich, Am Trieb 13, D-6078 Neu-Isenburg (DE)**
Erfinder: **Dassbach, Walter, Wilhelmsbader Ring 13, D-6450 Hanau (DE)**
Erfinder: **Niedner, Frank, Im Kirschenfeld 39, D-6370 Oberursel (DE)**
Erfinder: **Born, Friedrich, Dipl.-Phys., Sälzerweg 25, D-8553 Alzenau (DE)**
Erfinder: **Vogt, Manfred, Gartenstrasse 8, D-6477 Limeshain 1 (DE)**

(74) Vertreter: **Mehl, Ernst, Dipl.-Ing. et al, Postfach 22 01 76, D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum Manipulieren und/oder Lagern eines ein langgestrecktes Skelett mit Brennstäben aufweisenden Kernreaktorbrennelementes mittels einer Halteeinrichtung, indem am Skelett, insbesondere an einem Ende, ein mit Neutronen absorbierendem Werkstoff neben die Brennstäbe, insbesondere in für Absorberstäbe eines Kernreaktorsteuerelementes vorgesehene Zwischenräume zwischen den Brennstäben greifender Zusatzkörper befestigt ist.

Ein derartiges Verfahren ist aus der US-A-3 377 252 bekannt. Das Kernreaktorbrennelement ist bei diesem Verfahren ein bestrahltes Kernreaktorbrennelement in einem Kernreaktor, während der Zusatzkörper ein dem bestrahlten Kernreaktorbrennelement zugeordnetes Steuerelement ist, welches eine Halteplatte mit Steuerstäben aufweist, an der im Kernreaktor eine Betätigungseinrichtung für das Steuerelement angreift. Wird diese Betätigungseinrichtung vor dem Ausbau des Kernreaktorbrennelementes aus dem Kernreaktor vom Kernreaktorbrennelement abgehoben, bleibt die Halteplatte und damit das Steuerelement mit den Steuerstäben in «niedrigerer Reaktivitätsposition» fest am Kernreaktorbrennelement verrastet.

Kernreaktorbrennelemente weisen üblicherweise an einem Skelettende ein Kopfteil auf mit einem kastenartigen Rahmen oder einem Bügel. Unbestrahlte Kernreaktorbrennelemente werden ausserhalb eines Kernreaktors in der Regel mit diesem Kopfteil an einer zum Lagern dienenden Halteeinrichtung (z.B. einer in einer Deckenschiene geführten Laufkatze) hängend gelagert, während bestrahlte oder abgebrannte Kernreaktorbrennelemente ausserhalb eines Kernreaktors in der Regel vertikal stehend in besonderen, als Lagereinrichtung dienenden Gestellen gelagert werden. Sowohl unbestrahlte als auch bestrahlte Kernreaktorbrennelemente werden in der Regel in einem als Transporteinrichtung dienenden Transportbehälter liegend transportiert. Zum Manipulieren der einzelnen Kernreaktorbrennelemente sind Hebezeuge, z.B. Laufkrane oder Handhabungsmaschinen, als besondere Halteeinrichtungen vorgesehen.

Sowohl beim Lagern als auch beim Transportieren bestrahlter wie unbestrahlter Kernreaktorbrennelemente sind bestimmte Vorschriften hinsichtlich der Unterkritikalität der durch die Gesamtzahl der Kernreaktorbrennelemente ausserhalb eines Kernreaktors gebildeten geometrischen Anordnung einzuhalten, um so eine nukleare Kettenreaktion auszuschliessen.

Man kann die Unterkritikalität solcher geometrischen Anordnungen von Kernreaktorbrennelementen ausserhalb eines Kernreaktors entweder durch Einhalten bestimmter Mindestabstände der Kernreaktorbrennelemente voneinander oder durch Neutronen absorbierende Hüllkästen für die Kernreaktorbrennelemente sicherstellen.

Die Sicherstellung der Unterkritikalität durch Einhalten bestimmter Mindestabstände der ausserhalb eines Kernreaktors gelagerten Kernreaktorbrennelemente voneinander sind Grenzen durch den zur Verfügung stehenden Lager- oder Transportraum gesetzt.

Die aus Neutronen absorbierendem Werkstoff bestehenden Hüllkästen für gelagerte Kernreaktorbrennelemente sind in der Regel fester Bestandteil der als Lagereinrichtung dienenden Gestelle, in denen sie Aufnahmeschichten für die Kernreaktorbrennelemente bilden. Die Nutzung eines solchen Gestelles ist dadurch begrenzt, dass zur Einhaltung der Unterkritikalität der geometrischen Anordnung, die durch die im Gestell eingesetzten und damit ausserhalb eines Kernreaktors eingelagerten Kernreaktorbrennelemente gebildet wird, diese Kernreaktorbrennelemente nur eine bestimmte maximale Anreicherung an spaltbarem Material im Kernbrennstoff enthalten dürfen. Sollen in ein solches Gestell Kernreaktorbrennelemente mit erhöhter Anreicherung an spaltbarem Material im Kernbrennstoff eingesetzt und ausserhalb eines Kernreaktors eingelagert werden, so kann die Unterkritikalität nur eingehalten werden, wenn der Gehalt an Neutronenabsorberstoffen im Werkstoff der Hüllkästen erhöht wird. Es erfordert jedoch erheblichen technischen Aufwand, wenn als Lagereinrichtung vorhandene Gestelle dementsprechend umgerüstet werden sollen.

Selbst wenn an einem bestrahlten Kernreaktorbrennelement ein Steuerelement fest verrastet ist, sind ohne Einhalten von Mindestabständen von anderen Kernreaktorbrennelementen und ohne Hüllkästen aus ausreichend Neutronen absorbierendem Werkstoff Vorschriften über Unterkritikalität beim Transportieren und Lagern des mit den Steuerelement verrasteten Kernreaktorbrennelements mit anderen Kernreaktorbrennelementen unter Umständen insbesondere dann nicht automatisch erfüllt, wenn an diesen anderen Kernreaktorbrennelementen kein Steuerelement verrastet ist. Die Einhaltung von Vorschriften über Unterkritikalität ist dann also nur durch sorgfältige Überprüfung gewährleistet.

Der Erfindung liegt die Aufgabe zugrunde, die Einhaltung der Unterkritikalität der geometrischen Anordnung, die durch die Gesamtzahl der Kernreaktorbrennelemente in einer Transport- oder Lagereinrichtung insbesondere ausserhalb eines Kernreaktors gebildet wird, auch ohne Umrüstung dieser Transport- oder Lagereinrichtung und ohne Erweiterung des erforderlichen Transport- oder Lagerraumes automatisch zu erreichen und dadurch noch besser zu gewährleisten.

Zur Lösung dieser Aufgabe ist das Verfahren der eingangs erwähnten Art erfindungsgemäss dadurch gekennzeichnet, dass ein Zusatzkörper verwendet wird, der eine Handhabe aufweist, welcher ein der Handhabe angepasstes Kuppelteil an der Halteeinrichtung zugeordnet ist, mit der ein Kernreaktorbrennelement, das keinen solchen Zusatzkörper aufweist, nicht manipulier- oder lagerbar ist.

Günstigerweise ist der Zusatzkörper an einem Skelettende befestigt, so dass das Kernreaktorbrennelement an diesem Ende hängend manipuliert und/oder gelagert werden kann. Ferner ist es von Vorteil, wenn der Zusatzkörper am Skelett angeschraubt ist. Dieser Zusatzkörper absorbiert während des Manipulierens, Transportierens und Lagerns des Brennelementes Neutronen aus der unmittelbaren Umgebung der Brennstäbe und sorgt dadurch für die Einhaltung der Unterkritikalität der geometrischen Anordnung der insgesamt in eine Transport- oder Lagereinrichtung eingesetzten und ausserhalb eines Kernreaktors befindlichen Brennelemente, die mit solchen Zusatzkörpern ausgerüstet sind. Da sich der Zusatzkörper am Brennelement befindet, brauchen vorhandene Transport- oder Lagereinrichtungen nicht umgerüstet zu werden, wenn in sie Brennelemente mit erhöhter Anreicherung an spaltbarem Material im Kernbrennstoff eingesetzt werden sollen. Auch erfordert dieser Zusatzkörper, wenn überhaupt, nur eine unwesentliche Erweiterung des Transport- oder Lagerraumes.

Da das Kuppelteil der Halteeinrichtung der Handhabe am Zusatzkörper angepasst ist, kann mit der Halteeinrichtung kein Brennelement manipuliert oder gelagert werden, wenn es nicht mit einem Zusatzkörper versehen worden ist. Dadurch ist gewährleistet, dass mit der Halteeinrichtung keine geometrische Anordnung einer Anzahl von Brennelementen ausserhalb eines Kernreaktors zusammengestellt werden kann, deren Unterkritikalität nicht gewahrt ist.

In diesem Sinne ist es vorteilhaft, wenn der Zusatzkörper beim Assemblieren der Brennstäbe mit dem Skelett am Skelett befestigt wird. Günstigerweise wird er während aller nachfolgenden Manipulierungen, Transporte und Lagerungen am Brennelement belassen und erst kurz vor dem Einsetzen des Brennelementes in einen Kernreaktor oder besser noch danach vom Brennelement wieder enfernt.

Günstig ist es auch, wenn der Zusatzkörper bei Entnahme des Brennelementes aus einem Kernreaktor am Skelett befestigt wird. Auch hier ist es von Vorteil, wenn der Zusatzkörper während aller nachfolgenden Manipulierungen, Transporte und Lagerungen des entladenen, bestrahlten Brennelementes ausserhalb des Kernreaktors am Brennelement verbleibt, so dass mit diesem Brennelement zusammen mit anderen Brennelementen, die auch mit einem entsprechenden Zusatzkörper ausgerüstet sind, keine geometrische Anordnung ausserhalb eines Kernreaktors zusammengestellt werden kann, deren Unterkritikalität nicht gewahrt ist.

Günstigerweise wird das Brennelement in eine Transport- und/oder Lagereinrichtung (also z.B. einen Transportbehälter oder ein Lagergestell) eingesetzt, die eine Arretiervorrichtung aufweist, welche mit dem Zusatzkörper zusammenwirkt. Da das in die Transport- oder Lagereinrichtung eingesetzte Brennelement vom Bedienungspersonal nicht arretiert werden kann, wenn am Brennelement der Zusatzkörper nicht vorhanden ist, ist so eine zusätzliche Überwachungsmöglichkeit dafür geschaffen, dass in der Transport- oder Lagereinrichtung keine geometrische Anordnung von Brennelementen ausserhalb eines Kernreaktors zusammengestellt werden kann, deren Unterkritikalität nicht gewahrt ist.

Die Erfindung und ihre Vorteile seien anhand der Zeichnung an Ausführungsbeispielen näher erläutert:

Fig. 1 zeigt schematisch in Seitenansicht ein Kernreaktorbrennelement mit einem Zusatzkörper und einem Kuppelteil einer Halteeinrichtung.

Fig. 2 zeigt in Seitenansicht das Kuppelteil aus Fig. 1.

Fig. 3 und 4 zeigen Querschnitte des Kuppelteiles in Fig. 2.

Fig. 5 zeigt schematisch eine weitere Ausführungsform des Zusatzkörpers mit an diesem befestigten Kernreaktorbrennelementen.

Fig. 6 zeigt eine Ansicht des Zusatzkörpers mit den Brennelementen in Fig. 5 von unten.

Fig. 7 zeigt in Seitenansicht die schematische Andeutung eines in eine Transport- oder Lagereinrichtung eingesetzten Kernreaktorbrennelementes, an welchem ein Zusatzkörper befestigt ist.

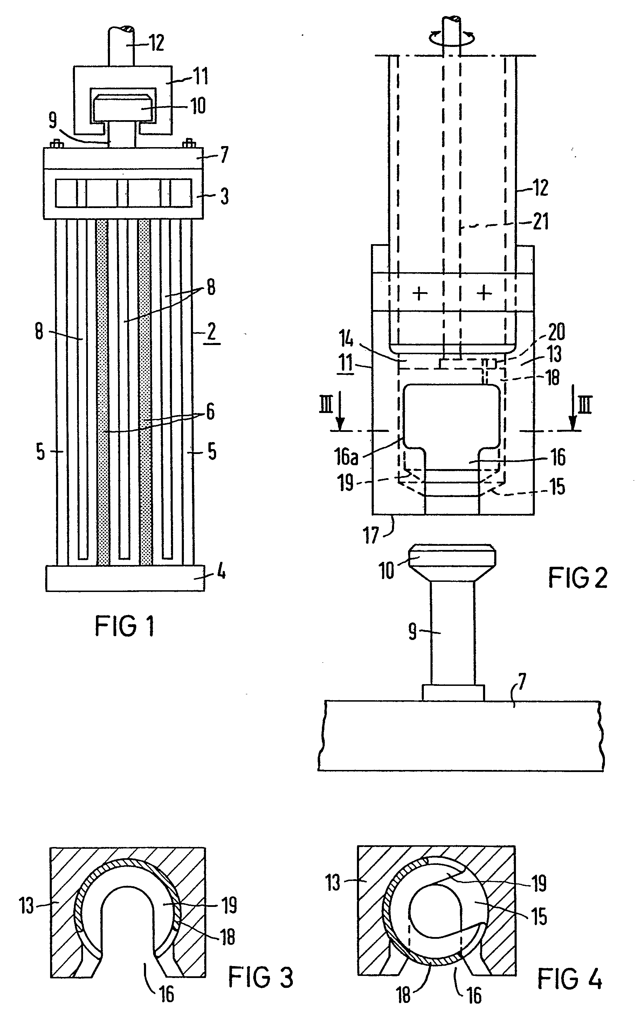

Das Brennelement 2 in Fig. 1 hat ein Skelett, welches ein Kopfteil 3, ein Bodenteil 4 sowie Kopfteil 3 und Bodenteil 4 verbindende Führungsrohre 5 aufweist. Ferner erstrecken sich vom Kopfteil 3 zum Bodenteil 4 Brennstäbe 6, die mit Kernbrennstoff gefüllte Metallhülsen sind.

An der oberen Stirnfläche des Kopfteiles 3 ist ein Zusatzkörper 7 festgeschraubt, also lösbar angebracht, der auf seiner am Kopfteil 3 anliegenden Seite Stäbe 8 aufweist, die durch das Kopfteil 3 hindurch in die Zwischenräume zwischen den Brennstäben 6 greifen. Der Zusatzkörper 7, zumindest aber seine in die Zwischenräume zwischen den Brennstäben 6 greifenden Stäbe 8, bestehen aus neutronenabsorbierendem Werkstoff, zum Beispiel Borstahl. An der Oberseite ist der Zusatzkörper 7 mit einer Handhabe versehen, die einen mit einem Ende unmittelbar am Zusatzkörper 7 befestigten Schaft 9 aufweist, an dessen anderem Ende sich ein den Querschnitt des Schaftes 9 überragender zylinderförmiger Kopf 10 befindet.

Der aus dem Schaft 9 und dem Kopf 10 bestehenden Handhabe ist ein dieser Handhabe angepasstes Kuppelteil 11 zugeordnet, das sich an einer nicht dargestellten Halteeinrichtung, z.B. einem Laufkran oder einer Laufkatze, angebracht ist. Diese Laufkatze kann sich in einer Deckenschiene in einem Lagerraum für unbestrahlte Brennelemente befinden.

Wie den Fig. 2, 3 und 4 genauer zu entnehmen ist, weist das Kuppelteil 11 einen an einem Hohlzylinder 12 hängenden Grundkörper 13 auf mit einer von seinem einen Ende mit dem Hohlzylinder 12 bis zu seinem anderen Ende reichenden Innenbohrung 14. Diese Innenbohrung 14 weist an diesem anderen Ende eine Schulter 15 auf. Ferner ist an diesem anderen Ende der Grundkörper 13 mit einem seitlichen Schlitz 16 versehen, der dem Profil der Handhabe am Zusatzkörper 7 für das Brennelement 2 angepasst ist. Die Schulter 15 in der Bohrung 14 liegt zwischen der Endfläche 17 des dem Zylinder 12 gegenüberliegenden Endes des Grundkörpers 13 und der dem Kopf 10 der Handhabe am Zusatzkörper 7 entsprechenden Auskragung 16a im Profil des Schlitzes 16, der auch bis zu dieser Endfläche 17 reicht.

Auf der Schulter 15 ruht in der Bohrung 14 koaxial zu dieser Bohrung 14 eine zylinderförmige Hülse 18, die an ihrem auf der Schulter 15 ruhenden Ende innen ebenfalls eine Schulter 19 aufweist und die seitlich mit einem von dem Ende mit der Schulter 19 ausgehenden, diese Schulter 19 auch erfassenden Längsschlitz versehen ist. Die Breite dieses Längsschlitzes ist etwas grösser als der Durchmesser des Kopfes 10 der Handhabe am Zusatzkörper 7 für das Brennelement 2.

An dem Ende mit der Schulter 19 gegenüberliegenden Ende ist die Hülse 18 an ihrer Stirnfläche mit einer Lasche 20 verschraubt, die starr am Ende einer Stange 21 befestigt ist, die koaxial zum Hohlzylinder 12 und zur Bohrung 14 im Hohlzylinder 12 angeordnet ist. Mit dieser Stange 21 kann die Hülse 18 um die Längsachse des Hohlzylinders 12 und der Bohrung 14 des Grundkörpers 13 gedreht werden.

Zum Kuppeln des Zusatzkörpers 7 mit der Halteeinrichtung wird die Handhabe am Zusatzkörper 7 bei sich überdeckenden Schlitzen des Grundkörpers 13 und der Hülse 18 seitlich in die Bohrung 14 des Grundkörpers 13 des Kuppelteiles 11 hineingeschoben. Sodann wird mit der Stange 21 die Hülse 18 um ihre Längsachse verdreht, so dass sie den Längsschlitz 16 im Grundkörper 13 verschliesst, wie es in Fig. 4 dargestellt ist. Beim Anheben des Brennelementes 2 mit Hilfe der Halteeinrichtung ruht dann der Kopf 10 der Handhabe am Zusatzkörper 7 auf der Schulter 19 in der Hülse 18 und diese wiederum auf der Schulter 15 des Grundkörpers 13 des Kuppelteiles 11.

Ein Manipulieren oder Lagern eines Brennelementes 2 mit der Halteeinrichtung ist wegen dieses Kuppelteiles nur möglich, wenn das Brennelement 2 mit dem Zusatzkörper 7 versehen ist, da sonst das Brennelement 2 nicht mit dem Kuppelteil 11 der Halteeinrichtung gekuppelt werden kann.

Deshalb ist es zweckmässig, den Zusatzkörper 7 schon beim Assemblieren der Brennstäbe 6 mit dem Skelett des Brennelementes 2 am Kopfteil 3 dieses Skelettes festzuschrauben. Die Stäbe 8 des Zusatzkörpers 7, die ja aus neutronenabsorbierendem Werkstoff bestehen, können hierbei in für Absorberstäbe eines Kernreaktorbrennelementes vorgesehene Zwischenräume zwischen den Brennstäben 6 des Brennelementes 2 greifen, sofern solche Zwischenräume vorgesehen sind.

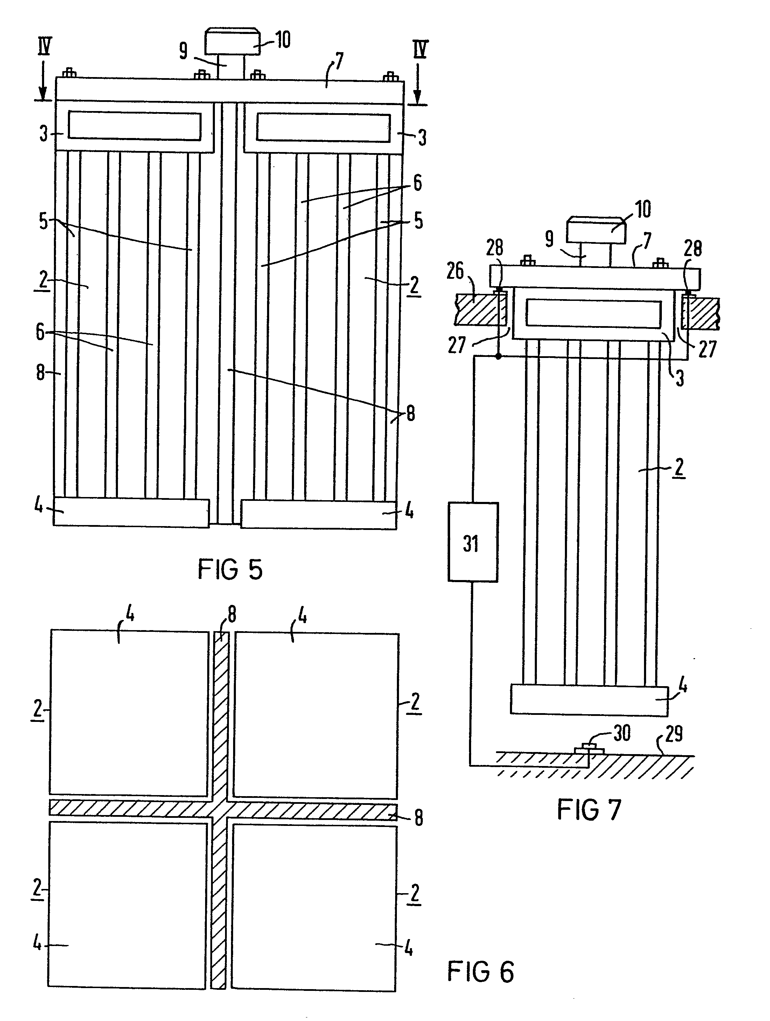

Am Zusatzkörper 7 können, wie die Fig. 5 und 6 zeigen, neben einem Brennelement 2 mindestens noch ein weiteres, z.B. noch drei Brennelemente 2 befestigt sein. Der Zusatzkörper 7 weist in diesem Fall einen Stab 8 aus neutronenabsorbierendem Werkstoff, z.B. Borstahl auf, der kreuzförmigen Querschnitt hat und der zwischen die jeweils in den Ecken eines Quadrates angeordneten Brennelemente 2 greift. Dieser Zusatzkörper 7 ist mit allen vier Brennelementen 2 beispielsweise verschraubt, also lösbar verbunden.

Nur mit Zusatzkörpern 7 versehene Brennelemente 2 nach den Fig. 1 oder 5 können mit einem Laufkran als Halteeinrichtung manipuliert werden, der ja ein der Handhabe an dem Zusatzkörper 7 angepasstes Kuppelteil 11 aufweist. Brennelemente 2, die nicht mit einem solchen Zusatzkörper 7 versehen worden sind, können nicht manipuliert werden, bevor ein solcher Zusatzkörper 7 an ihnen angebracht worden ist.

Ebenso weisen Halteeinrichtungen, also z.B. Laufkatzen in Deckenschienen, die sich in einem Brennelementlagerraum für unbestrahlte Brennelemente befinden, Kuppelteile 11 auf, die den Handhaben der Zusatzkörper 7 angepasst sind. Im Brennelementlagerraum können somit nur solche Brennelemente ordnungsgemäss an den Laufkatzen als Halteeinrichtung hängend gelagert werden, die mit Zusatzkörpern 7 versehen sind. Da schon mit dem Laufkran nur mit Zusatzkörpern 7 versehene Kernreaktorbrennelemente manipuliert und an die Laufkatzen im Brennelementlagerraum übergeben werden können, ist so gesichert, dass sich im Brennelementlagerraum an den Laufkatzen nur unbestrahlte Brennelemente befinden, die mit neutronenabsorbierenden Zusatzkörpern 7 versehen sind, so dass in diesem Brennelementlagerraum selbst dann die Unterkritikalität der geometrischen Anordnung der dort insgesamt ausserhalb eines Kernreaktors gelagerten Brennelemente gewahrt ist, wenn der Abstand der Brennelemente voneinander sehr klein ist. Das gilt auch dann, wenn Moderatorsubstanz, z.B. Wasserdampf, in den Brennelementlagerraum hinzutreten würde.

Man kann in günstiger Weise Arbeitsgänge einsparen, wenn an zu manipulierenden und/oder zu lagernden unbestrahlten Brennelementen 2 ein Absorberstäbe 8 aufweisendes Steuerelement eines Kernreaktors als Zusatzkörper 7 mit in die Zwischenräume zwischen den Brennstäben 6, beispielsweise in die Führungsrohre 5, greifenden Absorberstäben 8 als Zusatzkörper 7 möglichst schon beim Assemblieren des Brennelementes oder gleich danach befestigt wird. Dadurch wird ermöglicht, dieses als Zusatzkörper 7 dienende Steuerelement vom Brennelement zu lösen und an entsprechenden Steuergeräten des Kernreaktors anzubauen, nachdem das Brennelement in den Kernreaktor eingesetzt wurde. Man kann auch nicht aus Steuerelementen bestehende Zusatzkörper 7 verwenden, die nach dem Einsetzen der Brennelemente 2 in einen Kernreaktor von diesen Brennelementen 2 gelöst, aus dem Kernreaktor entfernt und gegebenenfalls dekontaminiert werden, so dass sie zum Befestigen an neu gefertigten unbestrahlten Brennelementen oder aber auch zum Wiederbefestigen an abgebrannten und aus dem Kernreaktor wieder zu entladenden Brennelementen zur Verfügung stehen.

Beim Entladen abgebrannter Brennelemente aus einem Kernreaktor ist es auch möglich, ein Steuerelement so an den zu entladenden Brennelementen als Zusatzkörper 7 zu befestigen, dass die Absorberstäbe 8 neben die Brennstäbe 6 der Brennelemente, beispielsweise in die Führungsrohre 5, greifen und in dieser Position unverrückbar sind.

Da auch abgebrannte Brennelemente nur dann z.B. mit einem Laufkran manipuliert werden können, der ein der Handhabe am Zusatzkörper 7 angepasstes Kuppelteil 11 aufweist, wenn an ihnen eine der beiden erwähnten Arten Zusatzkörper 7 befestigt ist, ist gewährleistet, dass auch beim Manipulieren und Lagern abgebrannter Brennelemente 2 ausserhalb eines Kernreaktors die Unterkritikalität der geometrischen Anordnung gewahrt ist, die die Gesamtheit der gelagerten abgebrannten Brennelemente 2 bildet. Auch hier können die abgebrannten Brennelemente mit kleinem Abstand voneinander ausserhalb eines Kernreaktors gelagert werden, ohne dass etwa hinzutretende Moderatorsubstanz die Unterkritikalität der geometrischen Anordnung gefährdet.

Eine zusätzliche Sicherungsmassnahme dafür, dass nur mit einem Zusatzkörper 7 versehene Brennelemente 2 manipuliert und/oder gelagert werden, ist schematisch in Fig. 7 angedeutet. Dort kann ein Brennelement 2, welches in einen in einer Borstahlplatte 26 ausgebildeten Schacht 27 einer Lager- oder Transporteinrichtung zu Lager- oder Transportzwecken ausserhalb eines Kernreaktors eingesetzt werden soll, nur dann durch die als Arretiervorrichtung dienende Borstahlplatte 26 arretiert werden, wenn am Kopfteil 3 des Brennelementes 2 ein diesen Kopfteil 3 überkragender Zusatzkörper 7 angebracht ist, der mit seinem überkragenden Teil auf der Borstahlplatte 26 nach dem Einsetzen des Brennelementes in den Schacht 27 ruht. An der Borstahlplatte 26 können zwei elektrische Kontakte 28 angebracht sein, die der Zusatzkörper 7 mit seinem das Kopfteil 3 des Brennelementes 2 überkragenden Teil betätigt, wenn er bei ordnungsgemäss im Schacht 27 eingesetzten Brennelement 2 ordnungsgemäss auf der Borstahlplatte 26 ruht.

Am Boden 29 des Schachtes 27 befindet sich ein weiterer elektrischer Kontakt 30, der betätigt wird, wenn das Brennelement 2 nicht mit einem sein Kopfteil 3 überkragenden Zusatzkörper 7 versehen wurde und sich deshalb nach dem Einsetzen in den Schacht 27 auf dem Boden 29 mit seinem Bodenteil 4 abstützt.

An den Kontakten 28 und 30 ist eine elektrische Alarmeinrichtung 31 angeschlossen, die Alarm gibt, wenn der Kontakt 30 betätigt wird, ohne dass die Kontakte 28 betätigt werden. Der Alarm der Alarmeinrichtung 31 zeigt dem Bedienungspersonal an, dass möglicherweise in den Schacht 27 ein Brennelement 2 eingesetzt wurde, bei dem es nicht zum Zusammenwirken der als Arretiervorrichtung dienenden Borstahlplatte 26 mit einem Zusatzkörper 7 gekommen ist und das deshalb keinen Zusatzkörper 7 aufweist. Das Brennelement 2 kann also sofort dem Schacht 27 wieder entnommen und mit einem neutronenabsorbierenden Zusatzkörper 7 versehen werden.

Bei der Einrichtung nach Fig. 7 kann es sich um einen Lager- wie auch um einen Transportbehälter sowohl für unbestrahlte wie auch für abgebrannte Brennelemente handeln. Da unbestrahlte und bestrahlte Brennelemente in der Regel horizontal liegend in einem entsprechenden Transportbehälter transportiert werden, ist es günstig, in einem solchen Transportbehälter eine hier nicht dargestellte entsprechende Arretiervorrichtung vorzusehen, die nur mit einem am Brennelement angebrachten neutronenabsorbierenden Zusatzkörper zusammenwirken kann, so dass das Bedienungspersonal ein in den Transportbehälter eingesetztes Brennelement nicht arretieren kann, wenn dieser Zusatzkörper 7 fehlt.

**Patentansprüche**

1. Verfahren zum Manipulieren und/oder Lagern eines ein langgestrecktes Skelett mit Brennstäben aufweisenden Kernreaktor-Brennelementes mittels einer Halteeinrichtung, indem am Skelett, insbesondere an einem Ende, ein mit neutronenabsorbierendem Werkstoff neben die Brennstäbe, insbesondere in für Absorberstäbe eines Kernreaktor-Steuerelements vorgesehene Zwischenräume zwischen den Brennstäben greifender Zusatzkörper befestigt wird, dadurch gekennzeichnet, dass ein Zusatzkörper (7) verwendet wird, der eine Handhabe (9, 10) aufweist, welcher ein der Handhabe angepasstes Kuppelteil (11) an der Halteeinrichtung zugeordnet ist, mit der ein Kernreaktor-Brennelement, das keinen solchen Zusatzkörper aufweist, nicht manipulier- oder lagerbar ist.

2. Verfahren nach Anspruch 1, dadurch gekennzeichnet, dass an dem Zusatzkörper (7) neben dem Kernreaktor-Brennelement (2) mindestens noch ein weiteres, ein eigenes Skelett mit Brennstäben aufweisendes Kernreaktor-Brennelement (2) so befestigt wird, dass der Zusatzkörper (7) mit neutronenabsorbierendem Werkstoff zwischen die an ihm befestigten Brennelemente (2) greift.

3. Verfahren nach Anspruch 1, dadurch gekennzeichnet, dass der Zusatzkörper (7) beim Assemblieren der Brennstäbe (6) mit dem Skelett am Skelett befestigt wird.

4. Verfahren nach Anspruch 1, dadurch gekennzeichnet, dass der Zusatzkörper (7) bei Entnahme des Brennelementes (2) aus einem Kernreaktor am Skelett befestigt wird.

5. Verfahren nach Anspruch 1, dadurch gekennzeichnet, dass ein Absorberstäbe aufweisendes Steuerelement eines Kernreaktors als Zusatzkörper (7) mit neben die Brennstäbe (6) greifendem, neutronenabsorbierendem Werkstoff am Skelett befestigt wird.

6. Verfahren nach Anspruch 1, dadurch gekennzeichnet, dass das Brennelement (2) in eine Transport- und/oder Lagereinrichtung eingesetzt wird, die eine Arretiervorrichtung (26) aufweist, welche mit dem Zusatzkörper (7) zusammenwirkt.

7. Verfahren nach Anspruch 6, dadurch gekennzeichnet, dass eine Transport- und/oder Lagereinrichtung verwendet wird mit einer Alarmeinrichtung (31), die bei Einsetzen des Brennelementes (2) und fehlendem Zusammenwirken der Arretiervorrichtung (26) mit dem Zusatzkörper (7) anspricht.

## Claims

1. A method of manipulating and/or storing a nuclear reactor fuel element having an elongate structure with fuel rods, by means of a supporting device, wherein an auxiliary body is secured to the structure, and preferably at one end grips with a neutron-absorbing material beside the fuel rods, in particular in the interspaces provided between the fuel rods for absorber rods of a nuclear reactor control element, characterised in that an auxiliary body (7) is used which has a handle (9, 10) which is assigned to a coupling member (11) on the supporting device, fitting to the handle and with which handle a nuclear reactor fuel element which does not have an auxiliary body of this kind, cannot be manipulated or stored.

2. A method as claimed in Claim 1, characterised in that, in addition to the nuclear reactor fuel element (2), at least one further nuclear reactor fuel element (2) which has a separate structure comprising fuel rods, is secured to the auxiliary body (7) in such a manner that the auxiliary body (7) grips between the fuel elements (2) which are secured to said body, with neutron-absorbing material.

3. A method as claimed in Claim 1, characterised in that the auxiliary body (7) is secured to the structure during the assembly of the fuel rods (6) to the structure.

4. A method as claimed in Claim 1, characterised in that when the fuel element (2) is removed from a nuclear reactor, the auxiliary body (7) is secured to the structure.

5. A method as claimed in Claim 1, characterised in that a control element, having absorber rods, of a nuclear reactor, is secured to the structure as an auxiliary body (7) with a neutron-absorbing material which grips beside the fuel rods (6).

6. A method as claimed in Claim 1, characterised in that the fuel element (2) is inserted into a transport and/or storage device comprising a locking device (26) which interacts with the auxiliary body (7).

7. A method as claimed in Claim 6, characterised in that a transport and/or storage device is used having an alarm device (31) which responds when the fuel element (2) is inserted and on failure of interaction of the locking device (26) with the auxiliary body (7).

## Revendications

1. Procédé de manipulation et/ou de stockage d'un assemblage combustible d'un réacteur nucléaire, présentant une ossature oblongue avec des barres combustibles, au moyen d'un dispositif de maintien, en fixant à l'ossature, notamment à l'une de ses extrémités, un corps supplémentaire à matériau absorbant les neutrons, pénétrant à côté des barres combustibles, notamment dans les intervalles entre les barres combustibles prévus pour des barres d'absorbeurs d'un élément de commande du réacteur nucléaire, caractérisé en ce qu'il consiste à utiliser un corps supplémentaire (7) qui présente une poignée (9, 10), à laquelle est associée sur le dispositif de maintien une pièce d'accouplement (11) adaptée à la poignée et par laquelle un assemblage combustible du réacteur nucléaire, qui ne présente pas de tels corps supplémentaires, ne peut pas être manipulé ni stocké.

2. Procédé suivant la revendication 1, caractérisé en ce qu'il consiste à fixer sur le corps supplémentaire (7), à côté de l'assemblage combustible (2) d'un réacteur nucléaire, encore au moins un autre assemblage combustible (2) de réacteur nucléaire présentant sa propre ossature avec des barres combustibles, de manière à ce que le corps supplémentaire (7) à matériau absorbant les neutrons pénètre entre les assemblages combustibles (2) fixés sur lui.

3. Procédé suivant la revendication 1, caractérisé en ce qu'il consiste à fixer le corps supplémentaire à l'ossature, lors de l'assemblage des barres combustibles (6) à l'ossature.

4. Procédé suivant la revendication 1, caractérisé en ce qu'il consiste à fixer le corps supplémentaire (6) à l'ossature lorsque l'on enlève l'assemblage combustible (2) du réacteur nucléaire.

5. Procédé suivant la revendication 1, caractérisé en ce qu'il consiste à fixer sur l'ossature un élément de commande d'un réacteur nucléaire, qui présente des barres d'absorbeur, à titre de corps supplémentaire (16) à matériau absorbant les neutrons pénétrant à côté des barres combustibles (6).

6. Procédé suivant la revendication 1, caractérisé en ce qu'il consiste à mettre l'assemblage combustible (2) dans un dispositif de transport et/ou de stockage qui présente un dispositif de blocage (26) coopérant avec le corps supplémentaire (7).

7. Procédé suivant la revendication 6, caractérisé en ce qu'il consiste à utiliser un dispositif de transport et/ou de stockage ayant un dispositif d'alerte (31) qui se déclenche lors de l'introduction de l'assemblage combustible (2) et lors d'une coopération défaillante du dispositif de blocage (26) avec le corps supplémentaire (7).

FIG 1

FIG 2

FIG 3

FIG 4

FIG 5

FIG 6

FIG 7